(19) Europäisches Patentamt
European Patent Office
Office européen des brevets

(11) Publication number: 0 115 712 A1

(12) # EUROPEAN PATENT APPLICATION

(21) Application number: 83402136.2

(22) Date of filing: 03.11.83

(51) Int. Cl.³: C 08 L 71/04, C 08 L 53/02 // (C08L71/04, 53/02, 23/02)

(30) Priority: 10.11.82 US 440738

(43) Date of publication of application: 15.08.84 Bulletin 84/33

(84) Designated Contracting States: DE FR GB IT NL

(71) Applicant: GENERAL ELECTRIC COMPANY, 1 River Road, Schenectady New York 12305 (US)

(72) Inventor: Lee, Gim Fun, Jr., 11 Drawbridge Drive, Albany New York 12203 (US)

(74) Representative: Catherine, Alain, GETSCO 42, avenue Montaigne, F-75008 Paris (FR)

(54) **Polyphenylene ether resin compositions containing an olefin polymer or copolymer.**

(57) Thermoplastic compositions of polyphenylene ether resin and a diblock copolymer of an alkenyl aromatic compound and a conjugated diene (which optionally can be hydrogenated), containing polyolefin resin in large amount, are described. The compositions are moldable into articles which do not exhibit the brittleness and tendancy toward delamination often associated with use of large amounts of polyolefin in polyphenylene ether resin compositions.

EP 0 115 712 A1

ACTORUM AG

TITLE MODIFIED
see front page

POLYETHYLENE ETHER RESIN COMPOSITIONS
CONTAINING OLEFIN POLYMER OR COPOLYMER

## BACKGROUND OF THE INVENTION

The polyphenylene ethers are high performance engineering thermoplastics which possess high melt viscosities and softening points and this makes them useful for many applications where resistance to high temperatures is desired. These materials are described in many publications, including U.S. Patents 3,306,874 ; 3,306, 875 ; 3,257,357 and 3,257, 358.

Certain properties of the polyphenylene ethers are undesirable for some uses, however. For example, parts molded or otherwise shaped from polyphenylene ether resins are somewhat brittle due to poor impact strength and, thus, they are more easily fractured or shattered. Also, the relatively high melt viscosities and softening points of the polymer sometimes cause difficulties in processing. Because of the high temperatures required to melt the resin and achieve good flow, special equipment is often necessary. Unfortunately, the resin is more likely to undergo degradation and discoloration at such elevated temperatures.

It is now well known that properties of the polyphenylene ether resins can be altered materially by blending with other resins. For instance, U.S. Patent 3,383,435 discloses compositions of polyphenylene ether resin and polystyrene which are characterized by improved properties both during and after molding.

It is also known that when polyethylene, an olefin resin, is incorporated in small amounts such as 5 parts by weight or less with polyphenylene ether resin or composition of the resin, the melt flow is improved. Polyphenylene ether resin and polyethylene are not usually compatible, however. If attempts are made to include larger amounts of the polyethylene in the resin, the resultant mixture is less homogeneous. Phase separation occurs during molding of such resins so that molded articles may be brittle and tend to undergo delamination.

It has been recently found that relatively larger amounts of polyethylene as well as other olefin polymers and copolymers can be successfully incorporated into a polyphenylene ether resin composition if certain elastomeric triblock copolymers are present. Compositions of this kind, which are characterized by good melt flow properties, are described in U.S. Patent No. 4,166,055.

Still more recently it has been discovered that diblock copolymers of styrene and ethylene/butylene functions as an effective compatibilizer for incorporating relatively large amounts of olefin polymers and copolymers into polyphenylene ether resins and compositions thereof. This discovery is disclosed in European Patent Application N° 82 110 688 filed November 19, 1982.

## INTRODUCTION TO THE INVENTION

The discovery has now also been made that diblock A-B copolymers of an alkenyl aromatic compound, A, and a conjugated diene, B, are useful to compatibilize no greater than about 20 parts by weight, based on the total resin weight, of an olefin polymer or copolymer in a polyphenylene

ether resin composition. The resent king of compositions are distinguishable over prior art compositions, in which the polyolefin are employed in an amount greater than about 20 parts per 100 parts of resin. Despite the presence of the smaller amounts of olefin resin in the compositions described herein, impressive improvements in impact strength in the molded article are nevertheless obtaines.

DESCRIPTION OF THE INVENTION

The polyphenylene oxide resins useful in accordance with the present compositions are, as previously indicated, individually well known and readily available. There are, however, various preferred composition components.

The preferred polyphenylene ethers are homoand copolymers of the formula :

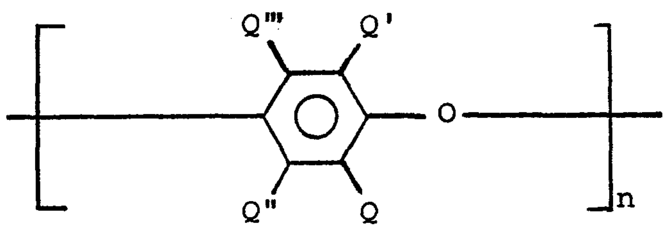

wherein Q, Q', Q", and Q"', are independently selected from the group consisting of hydrogen, halogen, hydrocarbon radicals, halohydrocarbon radicals, hydrocarbonoxy radicals and halohydrocarbonoxy radicals, and n represents the total number of monomer units and is an integer of at least about 20, and more usually at least 50.

Especially preferred is poly(2,6-dimethyl-1,4-phenylene) ether.

These can be made by following procedures described in the literature such as the patents mentioned above.

The diblock A-B copolymers of an alkenyl aromatic compound, A, and a conjugated diene, B, are derived from alkenyl aromatic compounds having the formula :

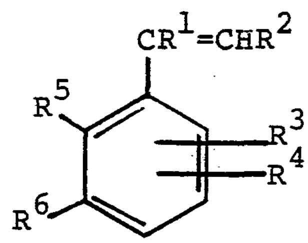

wherein $R^1$ and $R^2$ are selected from the group consisting of hydrogen and lower alkyl or alkenyl groups of from 1 to 6 carbon atoms; $R^3$ and $R^4$ are selected from the group consisting of chloro, bromo, hydrogen, and lower alkyl groups of from 1 to 6 cabon atoms; and $R^5$ and $R^6$ are selected from the group consisting of hydrogen and lower alkyl and alkenyl groups of froml to 6 carbon atoms or $R^5$ and $R^6$ may be concatenated together with a hydrocarbyl group to form a naphthyl group.

Specific examples of alkenyl aromatic monomers include styrene, bromostyrene, chlorostyrene, a-methylstyrene, para-méthyl styrene, vinylxylene, divinylbenzene, vinyl naphthalene, and vinyl-toluene.

There are copolymerized with the polydiene, B, which is derived from, for example, 1,3-butadiene, 2-methyl-1,3-butadiene and 1,3-pentadiene.

The A-B block copolymers can be made by following procedures which are well known in the art or described in the patent literature, for example, in U.K. Patent No 1,145,923. These polymers are also commercially available, e.g., from Shell Chemicals under the trade designation Shellvis 50. Preferably, these are diblock copolymers in which the aliphatic unsaturation, as in block B, has been reduced by hydrogenation. Such copolymers will preferably have the average unsaturation of rubber block B decreased to less than 20%, and more preferably less than 10% of its original value.

Hydrogenation can be carried out using a variety of hydrogenating catalysts, such as nickel on Kieselguhr, Raney nickel, copper chromite, molybdenum sulfide, and finely divided platinum or other noble metals on a carrier.

Hydrogenation can be conducted at virtually any desired temperature or pressure, e.g., ranging from atmospheric to 3,000 p.s.i.g. (2069 $N/cm^2$) and from 75° to 600°F., (23,9 to 315,5°C), for up to 24 hours. Such procedures are well known.

The olefin resin can be polyethylene, polypropylene, polyisobutylene, copolymers of ethylene and propylene, as well as copolymers of ethylene and organic esters such as ethylene vinyl acetate, ethylene ethyl acrylate, ethylene methyl acrylate, and so forth. These are commercially available or are otherwise prepared from the known teachings.

The polyethylene ether resin and compatibilizer can be present in widely ranging proportions, but normally are present in weight amounts of from 40:1 to 1:1 of polyphenylene ether: compatibilizer (diblock copolymer).

For best effectiveness, the polyolefin should be included in amounts of at least about 3, and more usually from about 3 to about 20 parts by weight, based on 100 parts of the combined total of polyphenylene ether, compatibilizer and polyolefin (i.e., the resin in the composition).

Other ingredients can also be included in the compositions. These can be selected from among additives comonly employed with plastics, such as fillers and/or reinforcements, strengthening fibers, plasticizers, colorants, dyes, flame retardants, antioxidants, pigments, mold release agents, and so forth. Minor but effective amounts are selected normally ranging from 1 to 50 parts by weight of the total composition weight.

The compositions can be prepared using any of the known procedures. In one such procedure, a preblend of the ingredients is formed, extruded in a single or twin screw

extruder at a temperature of between 400 and 550°F (204 and 288°C), chopped, cut or ground to smaller size and injection molded at temperatures of from 400 to 500°F (204 to 288°C) to desired shape and size.

## DESCRIPTION OF THE SPECIFIC EMBODIMENTS

The following examples illustrate the invention. They are intended as preferred embodiments only and not as a limitation on the scope of the invention. All parts are by weight.

## EXAMPLES 1-3

The ingredients noted below were blended on a mixer and the resultant blends were extruded on a twin screw 28 mm Werner-Pfleiderer extruder at 500°C (288°C). The extrudate was formed with pellets and injection molded at 500°F (288°C) into test bars. The results are set forth in the Table.

TABLE

| EXAMPLE | 1 | 2* | 3** |
|---|---|---|---|
| **Ingredients** | | | |
| Poly(2,6-dimethyl-1,4-phenylene ether) résine (PPO® General Electric Co.) | 75 | 75 | 75 |
| A-B diblock copolymer of styrene and ethylene/butylene (Shellvis 50, hydrogenated) | 10 | -- | -- |
| Polyethylene (Rexene 126, low density) | 10 | 10 | -- |
| Isopropylated triphenyl phosphate (FMC's Kronitex 50) | 25 | 25 | 25 |
| **Properties** | | | |
| Izod impact strength, ft.lbs./in | 8.4 | 1.3 | 0.7 |
| Gardner impact strength, | 100 | $<$10 | $<$10 |
| Tensile elongation, % | 82 | 12 | 74 |

* comparison in sense that no diblock copolymer is present

** comparison in sense that no polyethylene or diblock copolymer are present

$<$ means less than.

The above mentioned patents and/or publications are incorporated herein by reference. Obviously, other modifications and variations of the present invention are possible in light of the above teachings. For example, instead of poly(2,6-dimethyl-1,4-phenyleneether there can be substituted poly(2,6-dimethyl-co-2,3,6-trimethyl-1,4-phenylene) ether copolymer.

CLAIMS:

1. A thermoplastic composition, comprising in intimate admixture:

(a) a polyphenylene ether resin ; and

(b) in property improving combination, (i) an olefin resin and (ii) a diblock copolymer of an alkenyl aromatic compound and a conuugated diene, said olefin resin being present in an amount no greater than about 20 parts by weight, per 100 parts of resinous components (a), (b) (i) and (b) (ii), combined.

2. A composition according to Claim 1, in which the polyphenylene ether resin is poly(2,6-dimethyl-1, 4-phenylene) ether.

3. A composition according to Claim 1, in which the weight ratio of polyphenylene ether to diblock copolymer is from 40:1 to 1:1;

4. A composition according to Claim 1, in which the olefin resin is selected from among polyethylene, polypropylene, polyisobutylene, copolymers of ethylene and propylene, copolymers of ethylene and organic esters, and mixtures of any of the foregoing.

5. A composition according to Claim 1, in which the olefin resin is polyethylene.

6. A composition according to Claim 1, in which the polymer is a diblock copolymer of styrene and butadiene.

7. A composition according to Claim 6, in which the diblock copolymer has been hydrogenated to reduce the aliphatic unsaturation.

8. A composition according to Claim 1, which contains from about 3 to about 20 parts by weight of the olefin resin (b) (ii), based on 100 parts of (a), (b) (i) and (b) (ii) combined.

9. A composition according to Claim 1, which also includes one or more additives selected from among flame

retardants, fillers and/or reinforcements, strengthening fibers, plasticizers, pigments and antioxidants.

10. A method for improving the compatability of a mixture of an olefin resin and a polyphenylene ether resin, which comprises including in the mixture an effective amount of a polymer which is a hydrogenated diblock copolymer of an alkenyl aromatic compound and a conjugated diene.

European Patent Office

# EUROPEAN SEARCH REPORT

0115712

Application number

EP 83 40 2136

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-3 015 514 (ASAHI-DOW) * claims * | 1-10 | C 08 L 71/04 C 08 L 53/02 // (C 08 L 71/04 C 08 L 53/02 C 08 L 23/02 ) |
| P,Y | PATENTS ABSTRACTS OF JAPAN, volume 6, no. 257(C140)(1135), December 16, 1982, & JP - A - 57 149351 (SUMITOMO KAGAKU KOGYO K.K.) 14-09-1982 * the entire abstract * | 1-10 | |
| A | PATENTS ABSTRACTS OF JAPAN, volume 4, no. 151(C-28)(633), October 23, 1980, & JP - A - 55 98239 (ASAHI DOW K.K.) 26-07-1980 * the entire abstract * | 1 | |
| A | FR-A-2 372 864 (GENERAL ELECTRIC) * claims * | 1 | TECHNICAL FIELDS SEARCHED (Int. Cl. 3) C 08 L |
| A | US-A-4 242 263 (G.F. LEE) * claims; column 2, lines 22-27 * | 1 | |

The present search report has been drawn up for all claims

| Place of search | Date of completion of the search | Examiner |
|---|---|---|
| THE HAGUE | 14-02-1984 | DERAEDT G. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82